# FASCICULE DE BREVET EUROPEEN

(11) **EP 2 870 516 B1**
(45) Date de publication et mention de la délivrance du brevet: **02.12.2020**
(21) Numéro de dépôt: 13734106.1
(22) Date de dépôt: 05.07.2013
(51) Int. Cl.: G05D 16/10

(54) **ROBINET DÉTENDEUR AVEC FONCTION DE PRESSION RÉSIDUELLE INTÉGRÉE DANS LE DÉTENDEUR DE PRESSION**
DRUCKMINDERERVENTIL MIT DARIN EINGEBAUTER RESTDRUCKFUNKTION
PRESSURE-REDUCING VALVE HAVING A RESIDUAL PRESSURE FUNCTION BUILT INTO THE VALVE

(30) Priorité: 09.07.2012 LU 92040
(43) Date de publication de la demande: 13.05.2015
(73) Titulaire: Luxembourg Patent Company S.A., 7440 Lintgen (LU)
(72) Inventeur: SCHMITZ, Jean-Claude, L-7340 Heisdorf (LU); LAMIABLE, Morgan, F-54430 Heumont (FR); RISSE, Claude, F-57310 Bertrange (FR)
(74) Mandataire: Lecomte & Partners
(86) Numéro de dépôt international: PCT/EP2013/064274
(87) Numéro de publication internationale: WO 2014/009279

(56) Documents cités:
- WO-A1-2009/074668
- GB-A- 2 308 425
- GB-A- 2 349 200
- US-A- 3 451 421
- US-A1- 2005 263 189
- US-B2- 7 814 931

## Description

### Domaine technique

L'invention a trait à un dispositif de régulation du débit et/ou de la pression d'un fluide tel qu'un gaz sous pression. Plus particulièrement l'invention a trait à un détendeur pour gaz sous pression.

### Technique antérieure

Dans le domaine du stockage de gaz sous pression, en particulier pour le stockage dans des bouteilles de certains gaz utilisés dans le domaine médical tel que de l'oxygène, il est courant de prévoir une fonction de maintien de pression résiduelle sur les robinets disposés sur les bouteilles. Il s'agit essentiellement d'un dispositif du type vanne anti-retour avec un clapet ou obturateur soumis à un effort élastique de fermeture et configuré pour s'ouvrir lorsque la pression bouteille est supérieure à une valeur donnée assez faible de l'ordre de quelques bars. L'objectif de ce dispositif est ainsi d'empêcher une mise à l'air directe de la bouteille lorsqu'elle est vide. En effet, en l'absence d'un tel dispositif, lorsque la bouteille est vide et que le robinet est laissé en position ouverte, l'air ambiant de la bouteille peut entrer en contact avec l'intérieur de la bouteille et ainsi potentiellement la contaminer. De plus, en branchant la sortie du robinet à une source de gaz sous pression, il peut également être possible de remplir au moins partiellement la bouteille d'un gaz potentiellement contaminant. Le dispositif sus mentionné n'autorise de liaison de l'intérieur de la bouteille et l'extérieur qu'en présence d'un débit de service, ce qui en pratique empêche toute contamination par contre courant. Il empêche également tout remplissage forcé non autorisé.

Le document de brevet GB 2 349 200 A divulgue un robinet détendeur pour bouteille de gaz sous pression, équipé d'une fonction de maintien de pression résiduelle. Le robinet comprend essentiellement un corps avec un raccord à visser sur un col de bouteille, une sortie et un passage reliant l'entrée à la sortie. Le robinet comprend également un raccord de remplissage avec un clapet anti-retour en liaison avec le passage. Il comprend également une vanne de fermeture du passage en aval de l'embranchement avec le raccord de remplissage, et un détendeur disposé en aval de la vanne de fermeture. Il comprend également un sélectionneur de débit sous forme d'un disque avec des trous de passage calibrés, commandé en rotation par un volant distinct du volant de commande de la vanne de fermeture. La fonction de maintien de pression résiduelle est intégrée au détendeur. Ce dernier comprend en effet un obturateur mécaniquement relié à un piston mobile délimitant avec le corps une chambre de régulation. Le gaz sous pression en amont de l'obturateur est laminé et détendu au passage de l'obturateur en position intermédiaire. Il s'écoule alors au travers du piston pour remplir la chambre de régulation délimitée par la face supérieure du piston. Si la pression du gaz est trop importante, l'effort résultant sur le piston va le déplacer vers le bas de manière à réduire la section de passage de l'obturateur et vice-versa. La face supérieure du piston comprend également un joint concentrique au passage pour le gaz, ce joint étant destinée à coopérer de manière étanche avec un siège sur une portion du corps en vis-à-vis du piston. Ce dernier est soumis à un effort élastique d'un ressort qui tend à rapprocher le joint en question du siège et à ouvrir l'obturateur. A l'état de repos, l'obturateur est donc ouvert, ce qui permet le passage du gaz au travers du détendeur jusqu'au joint en contact étanche avec le siège. La surface hydraulique du piston au niveau du joint en question est légèrement supérieure à la surface hydraulique opposée du côté de l'obturateur. Ces deux surfaces étant soumises à la même pression, la différence positive de surface entre la face supérieure et la face inférieure du piston génère un effort dirigé vers le bas faisant descendre le piston et ouvrant le passage entre le joint et le siège. Ces derniers forment ainsi une vanne de maintien de pression résiduelle intégrée dans le détendeur. Le robinet de cet enseignement est par conséquent intéressant notamment du point de vue de l'intégration de la fonction de pression résiduelle. Il est toutefois de construction assez complexe et encombrante notamment en raison de la présence de la vanne de fermeture latérale.

Le document de brevet US 7,814,931 B2 divulgue un dispositif de régulation de débit d'un fluide, plus particulièrement de liquide, notamment pour pulvérisateurs. Ce dispositif travaille donc à des pressions nettement inférieures à celles de l'enseignement précédent. Le dispositif comprend un corps avec un premier élément mobile en translation et relié au corps via une membrane étanche. Le premier élément mobile est soumis à un effort élastique tendant à le rapprocher d'un premier siège formé dans le corps. La membrane est spécialement conçue pour coopérer avec ce siège. En position de repos, le ressort maintient la membrane en contact avec le siège de forme circulaire. Le passage de fluide au travers du premier siège est ainsi fermé de manière étanche par la membrane. Le dispositif comprend, en outre, un deuxième élément mobile relié mécaniquement au premier et coopérant avec un deuxième siège en amont du premier siège. Le deuxième élément mobile a pour effet de moduler la section de passage du fluide en amont du premier siège et du premier élément mobile. Lorsque l'on décider d'ouvrir le dispositif, une partie de l'effort élastique tendant à presser le premier élément mobile vers son siège est libéré. La pression du fluide à l'entrée du dispositif exercée sur la membrane peut déplacer le premier élément et ouvrir le passage. Si la pression et, par conséquent, le débit faiblissent le passage va se réduire afin de maintenir la pression. Si la pression faiblit de trop, le passage va automatiquement se fermer, ce qui empêche d'avoir un écoulement avec un débit trop faible. Cet enseignement illustre un principe intéressant qu'un élément mobile de régulateur de débit peut assurer, à savoir la fermeture du passage en cas de débit trop faible. Il ne permet cependant pas d'assurer une fermeture sécurisée du passage puisqu'une pression d'entrée importante est susceptible de déplacer le premier élément et d'ouvrir le passage.

Le document de brevet WO 2009/074668 A1 divulgue un détendeur pour gaz sous pression, assurant également une fonction de vanne de fermeture. Il ne comprend pas de dispositif de maintien de pression résiduelle.

Le document de brevet US 2005/0263189 A1 divulgue un dispositif de régulation du débit et/ou de la pression d'un fluide, conforme au préambule de la revendication 1.

### Résumé de l'invention

### Problème technique

L'invention a pour objectif de proposer un dispositif de régulation du débit et/ou de la pression d'un fluide apte à assurer, en outre, une fonction de fermeture et une fonction de maintien de pression résiduelle d'une manière simple et fiable.

### Solution technique

L'invention a pour objet un dispositif de régulation du débit et/ou de la pression d'un fluide, comprenant:
- un corps avec une entrée, une sortie et un passage reliant l'entrée à la sortie;
- un premier obturateur du passage;
- un élément mobile mécaniquement relié au premier obturateur, avec une face délimitant avec le corps une chambre de régulation en aval du premier obturateur et comprenant une portion apte à entrer en contact de manière étanche avec le corps en vue de former un deuxième obturateur du passage;
- des premiers moyens élastiques agissant sur l'élément mobile dans le sens d'ouverture du premier obturateur et de fermeture du deuxième obturateur; dans lequel
le premier obturateur est configuré de manière à fermer le passage par un mouvement essentiellement dans le sens d'écoulement normal du fluide; et les premiers moyens élastiques peuvent être rendus inactifs de manière à permettre la fermeture du premier obturateur et l'ouverture du deuxième obturateur ; et remarquable en ce que le deuxième obturateur (24, 28) est un obturateur de maintien de pression résiduelle qui, en configuration de service, se ferme lorsque la pression à l'entrée est inférieure à une pression prédéterminée.

Selon un mode avantageux de l'invention, le dispositif comprend des deuxièmes moyens élastiques agissant sur l'élément mobile dans un sens opposé de fermeture du premier obturateur et d'ouverture du deuxième obturateur.

Selon un mode avantageux de l'invention, la portion de l'élément mobile formant le deuxième obturateur décrit un périmètre fermé d'un diamètre moyen inférieur, préférentiellement inférieur à 50%, plus préférentiellement inférieur à 40%, encore plus préférentiellement inférieur à 30%, de celui de la surface de la face de l'élément mobile délimitant la chambre de régulation.

Selon un mode avantageux de l'invention, la portion de l'élément mobile formant le deuxième obturateur présente un profil conique et la portion du corps coopérant avec ladite portion de l'élément mobile présente un profil conique correspondant. Le profil conique de l'élément mobile est préférentiellement du type mâle ou convexe et celui du corps est alors préférentiellement du type femelle ou concave.

Selon un mode avantageux de l'invention, le dispositif comprend un joint circulaire logé dans une gorge formée dans la portion conique de l'élément mobile et/ou du corps.

Selon un mode avantageux de l'invention, le dispositif comprend des moyens de mise en pression et de relâchement des premiers moyens élastiques, le premier obturateur se fermant et le deuxième obturateur s'ouvrant sous l'effort des deuxièmes moyens élastiques lorsque les premiers moyens élastiques sont relâchés.

Préférentiellement, les moyens de mise en pression comprennent un volant de commande rotatif, un coulisseau agissant sur les premiers moyens élastiques et des moyens de conversion du mouvement de rotation du volant de commande en mouvement de translation du coulisseau. Le coulisseau est préférentiellement disposé du côté des premiers moyens élastiques, opposé à l'élément mobile.

Préférentiellement, les moyens de mise en pression sont configurés pour ne pas présenter de position stable entre deux positions, l'une étant le relâchement des premiers moyens élastiques et l'autre étant une précontrainte desdits moyens élastiques.

Selon un mode avantageux de l'invention, les deuxièmes moyens élastiques comprennent un ressort disposé dans la chambre de régulation et prenant appui sur le corps.

Selon un mode avantageux de l'invention, la face de l'élément mobile délimitant la chambre de régulation et comprenant la portion formant le deuxième obturateur est dirigée vers le premier obturateur.

Selon un mode avantageux de l'invention, le corps comprend une portion faisant saillie dans la chambre de régulation, ladite portion logeant au moins partiellement le premier obturateur et coopérant avec la portion sur la face de l'élément mobile formant le deuxième obturateur.

Selon un mode avantageux de l'invention, le ressort des deuxièmes moyens élastiques est au moins partiellement disposé autour de la portion du corps faisant saillie dans la chambre de régulation.

Selon un mode avantageux de l'invention, le premier obturateur est apte à coopérer de manière étanche avec un siège dans le passage et s'étend au travers dudit siège jusqu'en amont de celui-ci. La portion élargie du premier obturateur coopérant avec le siège est ainsi disposée en amont dudit siège.

Selon un mode avantageux de l'invention, le dispositif comprend un troisième obturateur disposé en amont du premier obturateur et configuré de manière à fermer le passage par un mouvement essentiellement dans le sens d'écoulement normal du fluide, les premier et troisième obturateur étant configurés pour coopérer mutuellement de manière à ce que le troisième obturateur se ferme avant le premier.

Selon un mode avantageux de l'invention, le troisième obturateur est apte à coopérer de manière étanche avec un siège spécifique dans le passage et s'étend au travers dudit siège depuis une position en amont jusqu'à une position en aval dudit siège de manière à ce que le premier obturateur puisse entrer en contact avec le troisième obturateur.

Selon un mode avantageux de l'invention, le dispositif est un robinet pour bouteille de gaz, apte à travailler à des pressions supérieures à 50 bars, préférentiellement 100 bars, plus préférentiellement 150 bars.

### Avantages apportés

Les mesures de l'invention permettent de réaliser un dispositif de régulation tel qu'un détendeur avec fermeture intégrée et fonction de maintien de pression résiduelle intégrée. En effet, la configuration du premier obturateur telle qu'il se ferme naturellement avec la pression à l'entrée du dispositif permet d'assurer une fonction de fermeture fiable. Cette fonction peut être rendue plus sûre par l'ajout d'un obturateur supplémentaire. La disposition de l'obturateur de maintien de pression résiduelle sur l'élément mobile, en pratique le piston, du détendeur, et ce sur la face de l'élément mobile orientée vers le premier obturateur, réduit à une distance minimale la distance du passage pour le gaz entre l'obturateur du détendeur et l'obturateur de maintien de pression résiduelle. La réduction de la longueur et donc du volume de ce passage augmente la protection que la fonction de maintien de pression résiduelle est destinée à conférer au volume intérieur de la bouteille. En effet, lors de l'actionnement des moyens de précontrainte et de relâchement du premier ressort agissant sur l'élément mobile du détendeur, le passage entre la position où le premier obturateur est fermé et le deuxième obturateur est ouvert à la position opposée, c'est-à-dire où le premier obturateur est ouvert et le deuxième obturateur est fermé, provoque pendant une fraction de seconde un passage entre l'intérieur de la bouteille et l'ambiance extérieure. Il est donc important de minimiser le volume entre les deux obturateurs.

### Brève description des dessins

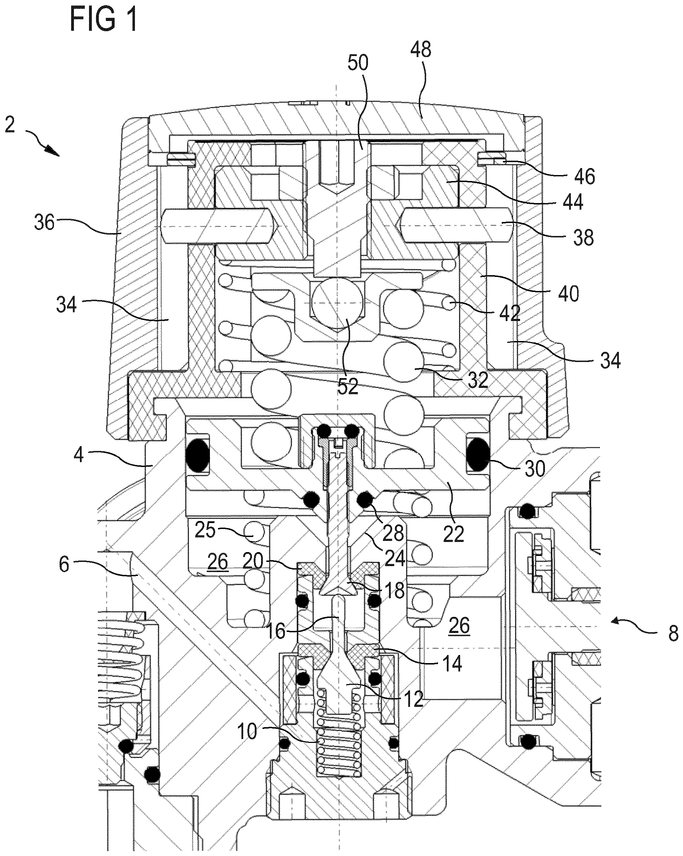

L'unique figure 1 est une vue en coupe longitudinale d'un dispositif de régulation du débit et/ou de la pression d'un fluide, conforme à l'invention.

### Description des modes de réalisation

L'unique figure 1 illustre un dispositif de régulation du débit et/ou de la pression d'un fluide. Il s'agit d'une coupe longitudinale montrant les éléments principaux du dispositif relatifs à l'invention, certains de ces éléments qui ne sont pas en relation directe avec l'invention n'étant pas illustrés.

Le dispositif illustré à la figure 1 est de manière préférentielle un dispositif de détente de gaz sous pression notamment dans une bouteille. Il peut par conséquent comprendre un embout (non représenté) avec une partie mâle destinée à être visée sur le col d'une bouteille de gaz sous pression.

Le dispositif 2 comprend un corps 4 dans lequel est formé un passage reliant une entrée de gaz 6 à une sortie de gaz 8. La notion d'entrée est ici associée au dispositif illustré, étant entendu qu'il peut comprendre d'autres fonctions non visibles sur la figure en raison de la vue coupée. Ces autres fonctions peuvent alors avoir pour conséquence de « déplacer » l'entrée du dispositif à une zone plus en amont, comme notamment une partie mâle destinée à être visée sur le col d'une bouteille de gaz sous pression et discutée ci-avant. La sortie de gaz 8 est illustrée de manière incomplète. Dans le cas précis de la figure, elle comprend un sélecteur de débit sous forme d'un disque rotatif à orifices calibrés, bien connu en soi de l'homme de métier. Il est toutefois entendu que d'autres formes de sortie peuvent être envisagées, telles que notamment une sortie simple sans sélecteur de débit.

Le dispositif comprend un dispositif d'obturation du passage, constitué d'un premier obturateur 18 et d'un obturateur supplémentaire 12, coopérants, chacun, avec un siège 20 et 14, respectivement. Ces deux obturateurs sont du type à siège inversé, à savoir que le sens du mouvement de l'obturateur vers la fermeture du passage correspond à celui du fluide lors de son écoulement normal en service. Les obturateurs seront décrits plus en détails plus loin.

Le dispositif de régulation 2 comprend également un piston 22 mobile en translation de manière étanche (via un joint 30) dans un logement cylindrique formé dans le corps 4. La face inférieure du piston 22 délimite avec le corps 4 une chambre de régulation 26. Le premier obturateur 18 est mécaniquement et rigidement lié au piston 22. Ce dernier comprend également un joint 28 disposé sur une portion conique concentrique avec l'axe longitudinal du piston 22 et de l'obturateur 18. Ce joint 28 est logé dans une gorge formée dans la portion conique et est destiné à coopérer de manière étanche avec une portion conique 24 correspondante du corps dans la chambre de régulation 26. Le joint 28 et la portion conique correspondante 24 servant de siège forment un deuxième obturateur assurant une fonction de maintien de pression résiduelle.

Le piston 22 est soumis à sa face supérieure à un effort élastique de premiers moyens élastiques, précisément d'un premier ressort 32, tendant à ouvrir le premier obturateur 18 et à fermer le deuxième obturateur 24, 28 de maintien de pression résiduelle. Il est également soumis à sa face inférieure à un effort élastique de deuxièmes moyens élastiques, précisément d'un deuxième ressort 25, opposé aux premiers moyens élastiques et tendant par conséquent à fermer le premier obturateur 18 et à ouvrir le deuxième obturateur 24, 28 de maintien de pression résiduelle.

L'effort élastique du premier ressort 32 peut être contrôlé par le volant de commande 36 disposé au sommet du dispositif de régulation. En effet, le volant 36 comprend deux rainures verticales 34 formées sur dans sa surface intérieure. Chacune de ces rainures 34 coopère avec un pion 38 traversant une rainure inclinée formée dans la chemise 40 (l'inclinaison de ces rainures n'étant pas visible sur la figure). Chacun des pions 38 est reçu ou encastré dans un coulisseau 44 comprenant en son centre une vis de pression réglable sur laquelle une coupelle 54 est en appui via une bille 52. Cette dernière est destinée à permettre une transmission d'effort de compression suivant l'axe longitudinal du dispositif tout en minimisant le couple de transmission d'effort en rotation lorsque le coulisseau se déplace suivant un mouvement combiné de translation et de rotation. En effet, lorsque le volant de commande 36 est actionné en rotation, les rainures verticales 34 transmettent l'effort de rotation aux pions 38 et au coulisseau. Le déplacement forcé des pions 38 le long des rainures inclinées formées dans la chemise 40 impose alors ce mouvement combiné de translation et de rotation aux pions et, partant, également au coulisseau 44. La coupelle 54 supporte l'extrémité supérieure du premier ressort 32. La rotation du volant 36 permet ainsi de modifier la contrainte du ressort 32 en question.

Bien que cela ne soit pas visible à la figure, les rainures inclinées formées dans la chemise 40 comprennent, chacune, une extrémité basse avec une encoche d'arrêt. Ces encoches d'arrêt sont destinées à permettre un arrête stable du coulisseau 44 en position basse, c'est-à-dire de précontrainte du ressort 32. Les extrémités hautes des rainures ne comprennent préférentiellement pas d'encoche. En effet, le dispositif de régulation comprend un troisième ressort 42 logé dans le chemise et agissant sur le coulisseau 44. Lorsque le volant est manipulé de manière à désengager les pions des encoches des rainures, l'effort élastique combiné des ressorts 32 et 42 fait alors remonter le coulisseau 44 tout en faisant tourner le volant 36. Une fois le premier ressort 32 relâché, le troisième ressort 42 est lui dimensionné pour exercer un effort élastique permanent sur le coulisseau 44 de manière à maintenir un jeu mécanique entre elle et le premier ressort 32. Cette mesure permet ainsi de garantir un relâchement total de tout effort élastique sur le piston 22 dirigé dans le sens d'ouverture du premier obturateur 18.

La chemise 40 peut être formée en deux pièces plastiques ou composites moulées, en forme de demi-coquilles. Elles peuvent être symétriques et comprendre un méplat au niveau de leur gorge inférieure coopérant avec un rebord du corps 4, de manière à stabiliser la chemise en rotation. Lors du montage, après assemblage de deux demi-coquilles, le volant 36 est glissé sur la surface cylindrique extérieure de la chemise et est maintenu en place par un circlips 46. Ce dernier stabilise également l'assemblage des deux demi-coquilles. Un couvercle 48 peut être disposé sur le volant. La vis de pression 50 peut être réglée via un outil coopérant en rotation avec son extrémité supérieure et moyennant le desserrage de l'écrou de blocage. Ce réglage peut notamment être réalisé en service lorsque le premier ressort 32 est à l'état précontraint.

Tel qu'illustré à la figure 1, le dispositif de régulation 2 est à l'état fermé, à savoir que l'effort de compression du premier ressort 32 est totalement relâché. Le troisième ressort 42 maintient le coulisseau 44 en position haute. Le deuxième ressort 25 maintient le piston 22 en position haute et le dispositif d'obturation en position fermée. Plus précisément, le premier obturateur 18, qui est attelé au piston, est pressé contre son siège 20 sous l'effort du ressort 25. Le deuxième obturateur 24, 28 de maintien de pression résiduelle est ouvert. L'obturateur supplémentaire 12 constituant un troisième obturateur est également en position fermée sous l'action du ressort 10 et l'absence d'effort opposé par le premier obturateur 18. Le dispositif d'obturation est ainsi doublement fermé et assure ainsi un niveau de sécurité élevé.

Lorsque l'on désire mettre le dispositif en service afin de débiter du gaz, le volant de commande 36 est manipulé de manière à mettre le coulisseau 44 en position basse. En référence à ce qui a été mentionné précédemment, cette position basse est une position stable et prédéfinie. Le ressort 32 est alors précontraint et exerce un effort sur le piston 22 qui est dirigé vers le bas. Le dispositif d'obturation s'ouvre, plus précisément le premier obturateur 18 s'ouvre et entre en contact avec la tige 16 du troisième obturateur 12. Le mouvement de descente du premier obturateur après contact avec le troisième a pour effet d'ouvrir également ce dernier. Le gaz sous pression peut alors s'écouler le long du passage au travers des sièges respectifs 14 et 20 du troisième et du premier obturateur 12 et 18. Une pression peut alors s'établir dans la chambre de régulation 26 avant que le deuxième obturateur 24, 28 ne puisse se fermer. Cette pression empêche la descente du piston 22 jusqu'à une fermeture de l'obturateur 24, 28 à condition qu'une pression minimale soit présente en amont du régulateur, c'est-à-dire dans la bouteille. En effet, la pression présente dans la chambre de régulation 26 agit sur une surface importante générant un effort résultant apte à vaincre l'effort du ressort 32 agissant sur la face opposée du piston. En cas de chute de pression en amont du régulateur, telle qu'elle devient inférieure à la plage de pression de travail de la chambre de régulation, la pression dans cette dernière ne pourra alors plus équilibrer l'effort du ressort 32 et le piston va descendre jusqu'à ce que l'obturateur 24 et 28 du maintien de pression résiduelle se ferme. Les premier et troisième obturateurs 18 et 12 sont alors grand ouverts. Le gaz ne peut alors plus passer et l'intérieur de la bouteille à laquelle le régulateur est raccordé reste isolé de l'ambiance extérieure.

Avant remplissage, le volant de commande 36 est en principe manipulé de manière à relâcher la précontrainte du ressort 32 et de permettre la remontée du piston 22 sous l'effort du ressort 25 et, partant, la fermeture du dispositif d'obturation 18, 12.

Pour le remplissage de la bouteille, un raccord spécifique connecté à l'entrée du dispositif de régulation via un clapet adéquat peut être utilisé. Un tel clapet est partiellement visible à la partie inférieure gauche de la figure 1. Il est bien connu en soi de l'homme de métier et ne sera pas davantage détaillé. Puisque le gaz ne doit pas traverser les obturateurs 18, 12 et 24/28, ceux-ci ne doivent pas être manipulés et le passage reste fermé.

Au cas où l'opération de relâchement de la précontrainte du ressort 32 n'aurait pas eu lieu avant le remplissage de la bouteille, seul l'obturateur 24, 28 de maintien de pression résiduelle est fermé, les deux autres 18 et 12 étant ouverts. Lorsque la pression dans la bouteille augmente au fur et à mesure de son remplissage, l'effort résultant de cette pression sur la surface du piston 22 délimitée par le joint 28 n'est pas suffisant pour déplacer le piston 22. En effet, le diamètre du tore ou anneau formé par le joint 28 est sensiblement inférieur à celui du piston 22 en soi. La surface hydraulique sur laquelle la pression s'exerce résultant en un effort opposé à celui du ressort 32 est alors d'autant plus inférieure à la surface hydraulique du piston 22 que ces surfaces sont proportionnelles au carré de leur diamètre (ou rayon).

Il est alors nécessaire de manipuler le volant de commande 36 pour relâcher la précontrainte du ressort 32 et permettre la remontée du piston 22. L'obturateur de maintien de pression résiduelle va alors s'ouvrir et, en même temps, les obturateurs 18 et 12 vont se fermer.

Lorsque l'on désire mettre en service le régulateur, il suffit alors de manipuler le volant de commande de manière à pré contraindre le ressort 32. Les obturateurs 18 et 12 vont alors s'ouvrir et le gaz peut s'écouler dans la chambre de régulation 26. Comme mentionné précédemment, ce n'est que lorsque la pression en amont du régulateur, c'est-à-dire la pression dans la bouteille à laquelle le régulateur est raccordé, devient inférieure à une pression prédéterminée que l'obturateur 24, 28 de maintien de pression résiduelle se ferme. Cette pression correspond essentiellement à la plage de pression de travail dans la chambre de régulation.

Dans la description du mode de réalisation de l'invention qui vient d'être faite, le dispositif d'obturation du régulateur de pression est du type à double obturateurs. Il est toutefois entendu que l'invention est également applicable à un régulateur pourvu d'un autre obturateur, tel que notamment un simple obturateur.

Toujours dans la description du mode de réalisation de l'invention qui vient d'être faite, l'élément mobile du détendeur est un piston d'une géométrie particulière. Il est toutefois entendu qu'il peut prendre d'autres formes. L'élément mobile du détendeur peut par ailleurs comprendre un soufflet métallique assurant l'étanchéité avec le corps en vue de délimiter la chambre de régulation.

Toujours dans la description du mode de réalisation de l'invention qui vient d'être faite, la liaison entre le piston et l'obturateur est une liaison mécanique rigide. Elle peut toutefois présenter certains degrés de liberté comme notamment un attelage autorisant un déplacement relatif limité entre ces deux éléments.

## Revendications

1. Dispositif de régulation (2) du débit et/ou de la pression d'un fluide, comprenant :
- un corps (4) avec une entrée (6), une sortie (8) et un passage reliant l'entrée à la sortie ;
- un premier obturateur (18) du passage ;
- un élément mobile (22) mécaniquement relié au premier obturateur (18), avec une face délimitant avec le corps une chambre de régulation (26) en aval du premier obturateur (18) et comprenant une portion (28) apte à entrer en contact de manière étanche avec le corps (4, 24) en vue de former un deuxième obturateur (24, 28) du passage ;
- des premiers moyens élastiques (32) agissant sur l'élément mobile (22) dans le sens d'ouverture du premier obturateur (18) et de fermeture du deuxième obturateur (24, 28) ;
dans lequel
le premier obturateur (18) est configuré de manière à fermer le passage par un mouvement essentiellement dans le sens d'écoulement normal du fluide ; et les premiers moyens élastiques (32) peuvent être rendus inactifs de manière à permettre la fermeture du premier obturateur (18) et l'ouverture du deuxième obturateur (24, 28) ;
**caractérisé en ce que** le deuxième obturateur (24, 28) est un obturateur de maintien de pression résiduelle qui, en configuration de service, se ferme lorsque la pression à l'entrée est inférieure à une pression prédéterminée.

2. Dispositif (2) selon la revendication 1, **caractérisé en ce qu'**il comprend des deuxièmes moyens élastiques (25) agissant sur l'élément mobile (22) dans un sens de fermeture du premier obturateur (18) et d'ouverture du deuxième obturateur (24, 28).

3. Dispositif (2) selon l'une des revendications 1 et 2, **caractérisé en ce que** la portion de l'élément mobile (22) formant le deuxième obturateur (24, 28) décrit un périmètre fermé d'un diamètre moyen inférieur, préférentiellement inférieur à 50%, plus préférentiellement inférieur à 40%, encore plus préférentiellement inférieur à 30%, de celui de la surface de la face de l'élément mobile (22) délimitant la chambre de régulation (26).

4. Dispositif (2) selon l'une des revendications 1 à 3, **caractérisé en ce que** la portion de l'élément mobile (22) formant le deuxième obturateur (24, 28) présente un profil conique et la portion (24) du corps (4) coopérant avec ladite portion de l'élément mobile présente un profil conique correspondant.

5. Dispositif (2) selon la revendication 4, **caractérisé en ce qu'**il comprend un joint circulaire (28) logé dans une gorge formée dans la portion conique de l'élément mobile (22) et/ou du corps.

6. Dispositif (2) selon la revendication 2, **caractérisé en ce qu'**il comprend des moyens (36, 38, 40, 44, 50, 52) de mise en pression et de relâchement des premiers moyens élastiques (32), le premier obturateur (18) se fermant et le deuxième obturateur (24, 28) s'ouvrant sous l'effort des deuxièmes moyens élastiques (25) lorsque les premiers moyens élastiques (32) sont relâchés.

7. Dispositif (2) selon la revendication 2, **caractérisé en ce que** les deuxièmes moyens élastiques comprennent un ressort (25) disposé dans la chambre de régulation (26) et prenant appui sur le corps (4).

8. Dispositif (2) selon l'une des revendications 1 à 7, **caractérisé en ce que** la face de l'élément mobile (22) délimitant la chambre de régulation (26) et comprenant la portion formant le deuxième obturateur (24, 28) est dirigée vers le premier obturateur (18).

9. Dispositif (2) selon l'une des revendications 1 à 8, **caractérisé en ce que** le corps (4) comprend une portion faisant saillie dans la chambre de régulation (26), ladite portion logeant au moins partiellement le premier obturateur (18) et coopérant avec la portion de la face de l'élément mobile (22) formant le deuxième obturateur (24, 28).

10. Dispositif (2) selon les revendications 7 et 9, **caractérisé en ce que** le ressort (25) des deuxièmes moyens élastiques est au moins partiellement disposé autour de la portion du corps (4) faisant saillie dans la chambre de régulation (26).

11. Dispositif (2) selon l'une des revendications 1 à 10, **caractérisé en ce que** le premier obturateur (18) est apte à coopérer de manière étanche avec un siège (20) dans le passage et s'étend au travers dudit siège jusqu'en amont de celui-ci.

12. Dispositif (2) selon l'une des revendications 1 à 11, **caractérisé en ce qu'**il comprend un troisième obturateur (12) disposé en amont du premier obturateur (18) et configuré de manière à fermer le passage par un mouvement essentiellement dans le sens d'écoulement normal du fluide, les premier et troisième obturateurs (18, 12) étant configurés pour coopérer mutuellement de manière à ce que le troisième obturateur (12) se ferme avant le premier (18).

13. Dispositif (2) selon la revendication 12, **caractérisé en ce que** le troisième obturateur (12) est apte à coopérer de manière étanche avec un siège spécifique (14) dans le passage et s'étend au travers dudit siège depuis une position en amont jusqu'à une position en aval dudit siège de manière à ce que le premier obturateur (18) puisse entrer en contact avec le troisième obturateur (12).

14. Dispositif (2) selon l'une des revendications 1 à 13, **caractérisé en ce qu'**il est un robinet pour bouteille de gaz, apte à travailler à des pressions supérieures à 50 bars, préférentiellement 100 bars, plus préférentiellement 150 bars.

## Patentansprüche

1. Vorrichtung zur Regelung (2) des Durchflusses und/ oder Druck eines Fluids, umfassend:
- Einen Körper (4) mit einem Einlass (6), einem Auslass (8) und einer den Einlass und den Auslass verbindenden Durchlass
- Einen ersten Verschluss (18) des Durchlasses;
- Ein mechanisch mit dem ersten Verschluss (18) verbundenes bewegliches Element (22), mit einer Fläche, die mit dem Körper eine Regelungskammer (26) stromabwärts des ersten Verschlusses (18) begrenzt und einen Abschnitt (28) umfassend, der geeignet ist in dichter Weise mit dem Körper (4, 24) in Kontakt zu treten, um einen zweiten Verschluss (24, 28) des Durchlasses zu bilden;
- erste elastische Mittel (32), die auf das bewegliche Element (22) in Richtung des Öffnens des ersten Verschlusses (18) und des Schließens des zweiten Verschlusses (24, 28) wirken;
wobei der erste Verschluss (18) dergestalt konfiguriert ist, den Durchlass durch Bewegung im Wesentlichen in der normalen Richtung des Fluidsflusses zu schließen; und die ersten elastischen Mittel (32) dergestalt deaktiviert werden können, dass das Schließen des ersten Verschlusses (18) und das Öffnen des zweiten Verschlusses (24, 28) ermöglicht wird;
**dadurch gekennzeichnet, dass** der zweite Verschluss (24, 28) ein Verschluss zur Aufrechterhaltung des Restdrucks ist, welcher in der Betriebsform schließt, wenn der Eingangsdruck niedriger als ein vorbestimmter Druck ist.

2. Vorrichtung (2) nach Anspruch 1, **dadurch gekennzeichnet, dass** sie zweite elastische Mittel (25) umfasst, die auf das bewegliche Element (22) in einer Richtung zum Schließen des ersten Verschlusses (18) und zum Öffnen des zweiten Verschlusses (24, 28) wirken.

3. Vorrichtung (2) nach Anspruch 1 und 2, **dadurch gekennzeichnet, dass** der den zweiten Verschluss (24, 28) bildende Abschnitt des beweglichen Elements (22) einen geschlossenen Umfang mit einem durchschnittlichen Durchmesser geringer als, vorzugsweise weniger als 50 %, bevorzugter weniger als 40 %, noch bevorzugter weniger als 30 % als dem der Oberfläche der Fläche des die Regelungskammer (26) begrenzenden beweglichen Elements (22) beschreibt.

4. Vorrichtung (2) nach einem der Ansprüche 1 bis 3, **dadurch gekennzeichnet, dass** der den zweiten Verschluss (24, 28) bildende Abschnitt des beweglichen Elements (22) ein konisches Profil und der mit dem Teil des beweglichen Elements zusammenwirkende Teil (24) des Körpers (4) ein entsprechendes konisches Profil aufweist.

5. Vorrichtung (2) nach Anspruch 4, **dadurch gekennzeichnet, dass** sie eine kreisförmige Dichtung (28) umfasst, die in einer Nut untergebracht ist, die in dem konischen Abschnitt des beweglichen Elements (22) und / oder des Körpers ausgebildet ist.

6. Vorrichtung (2) nach Anspruch 2, **dadurch gekennzeichnet, dass** sie Mittel (36, 38, 40, 44, 50, 52) zum Druckbeaufschlagen und Lösen der ersten elastischen Mittel (32), umfasst, wobei sich der erste Verschluss (18) schließt und der zweite Verschluss (24, 28) sich unter der Kraft der zweiten elastischen Mittel (25) öffnet, wenn die ersten elastischen Mittel (32) gelöst sind.

7. Vorrichtung (2) nach Anspruch 2, **dadurch gekennzeichnet, dass** die zweiten elastischen Mittel eine Feder (25) umfassen, die in der Regelungskammer (26) angeordnet ist und auf dem Körper (4) aufliegt.

8. Vorrichtung (2) nach einem der Ansprüche 1 bis 7, **dadurch gekennzeichnet, dass** die die Regelungskammer (26) begrenzende und den den zweiten Verschluss (24, 28) bildenden Abschnitt umfassende Fläche des beweglichen Elements (22) zum ersten Verschluss (18) ausgerichtet ist.

9. Vorrichtung (2) nach einem der Ansprüche 1 bis 8, **dadurch gekennzeichnet, dass** der Körper (4) einen in der Regelungskammer (26) hervorstehenden Abschnitt umfasst, wobei der Abschnitt den ersten Verschluss (18) zumindest teilweise aufnimmt und mit dem Abschnitt der Fläche des den zweiten Verschluss bildende bewegliche Elements (22) zusammenwirkt.

10. Vorrichtung (2) nach einem der Ansprüche 7 bis 9, **dadurch gekennzeichnet, dass** die Feder (25) der zweiten elastischen Mittel zumindest teilweise um den in die Regelkammer (26) hineinragenden Teil des Körpers (4) angeordnet ist.

11. Vorrichtung (2) nach einem der Ansprüche 1 bis 10, **dadurch gekennzeichnet, dass** der erste Verschluss (18) geeignet ist, auf dichtende Weise mit einem Sitz (20) im Durchlass zusammenzuwirken und sich durch diesen Sitz hindurch stromaufwärts davon erstreckt.

12. Vorrichtung (2) nach einem der Ansprüche 1 bis 11, **dadurch gekennzeichnet, dass** sie stromaufwärts des ersten Verschlusses (18) ein drittes Verschluss (12) umfasst und dergestalt konfiguriert ist, dass sie den Durchlass durch eine Bewegung im Wesentlichen in Richtung des normalen Fluidsflusses schließt, wobei der erste und der dritte Verschlüss (18, 12) konfiguriert sind miteinander zusammenzuarbeiten, so dass der dritte Verschluss (12) vordem ersten (18) schließt.

13. Vorrichtung (2) nach Anspruch 12, **dadurch gekennzeichnet, dass** der dritte Verschluss (12) geeignet ist, in dichter Weise mit einem spezifischen Sitz (14) im Durchlass zusammenzuwirken, und sich durch den Sitz ab einer Stromaufwärtsposition zu einer Stromabwärtsposition des Sitzes zu dergestalt zu erstrecken, so dass der erste Verschluss (18) mit dem dritten Verschluss (12) in Kontakt kommen kann.

14. Vorrichtung (2) nach einem der Ansprüche 1 bis 13, **dadurch gekennzeichnet, dass** es sich um einen Hahn für eine Gasflasche handelt, der geeignet ist unter Drücken von mehr als 50 bar, vorzugsweise 100 bar, noch bevorzugter 150 bar zu arbeiten.

## Claims

1. Control device (2) of the flow and/or pressure of a fluid, comprising:
- a body (4) with an inlet (6), an outlet (8) and a passage connecting the inlet to the outlet;
- a first shutter (18) of the passageway;
- a mobile element (22) mechanically connected to the first shutter (18) with a face defining with the body a control chamber (26) downstream of the first shutter (18) and comprising a portion (28) adapted to come into contact in a fluid tight manner with the body (4, 24) to form a second shutter (24, 28) of the passageway;
- first resilient means (32) acting on the movable member (22) in the opening direction of the first shutter (18) and closing direction the second shutter (24, 28);
wherein
the first shutter (18) is configured to close the passage by a movement substantially in the normal direction of flow of the fluid; and
the first resilient means (32) can be rendered inactive so as to allow closing of the first shutter (18) and opening the second shutter (24, 28);
**characterized in that** the second shutter (24, 28) is a shutter for maintaining a residual pressure which, in operating configuration, closes when the pressure at the inlet is inferior to a predetermined pressure.

2. Control device (2) according to claim 1, **characterized in that** it comprises second resilient means (24) acting on the movable member (22) in a direction of closing the first shutter (18) and opening the second shutter (24, 28).

3. Control device (2) according to one of claims 1 and 2, **characterized in that** the portion of the movable member (22) forming the second shutter (24, 28) forms a closed perimeter with an average diameter that is lower, preferably by less than 50%, more preferably by less than 40%, more preferably by less than 30%, than that of the surface of the face of the movable member (22) delimiting the control chamber (26).

4. Control device (2) according to one of claims 1 to 3, **characterized in that** the portion of the movable member (22) forming the second shutter (24, 28) has a conical profile and the portion (24) of body (4) cooperating with said portion of the movable member has a corresponding conical profile.

5. Control device (2) according to claim 4, **characterized in that** it comprises a circular seal (28) housed in a groove formed in the conical portion of the movable member (22) and/or of the body.

6. Control device (2) according to claim 2, **characterized in that** it comprises means (36, 38, 40, 44, 50, 52) for preloading and releasing the first resilient means (32), the first shutter (18) closing and the second shutter (24, 28) opening under the force of the second resilient means (24) when the first resilient means (32) are released.

7. Control device (2) according to claim 2, **characterized in that** the second resilient means comprise a spring (25) disposed in the control chamber (26) and bearing on the body (4).

8. Control device (2) according to one of claims 1 to 7, **characterized in that** the face of the movable member (22) delimiting the control chamber (26) and comprising the portion forming the second shutter (24, 28) is directed towards the first shutter (18).

9. Control device (2) according to one of claims 1 to 8, **characterized in that** the body (4) comprises a portion projecting into the control chamber (26), said portion housing at least partially the first shutter (18) and cooperating with the portion of the face of the movable member (22) forming the second shutter (24, 28).

10. Control device (2) according to claims 7 and 9, **characterized in that** the spring (25) of the second resilient means is at least partially disposed around the body portion (4) projecting into the control chamber (26).

11. Control device (2) according to one of claims 1 to 10, **characterized in that** the first shutter (18) is adapted to sealingly cooperate with a seat (20) in the passage and extends through said seat until upstream thereof.

12. Control device (2) according to one of claims 1-11, **characterized in that** it comprises a third shutter (12) disposed upstream of the first shutter (18) and configured to close the passageway by movement essentially in the normal direction of flow of the fluid, the first and third shutters (18, 12) being configured to mutually cooperate so that the third shutter (12) closes before the first one (18).

13. Control device (2) according to claim 12, **characterized in that** the third shutter (12) is adapted to sealingly cooperate with a specific seat (14) in the passage and extends through said seat from an upstream position to a downstream position of said seat so that the first shutter (18) can come into contact with the third shutter (12).

14. Control device (2) according to one of claims 1 to 13, **characterized in that** it is a valve for gas cylinder, capable to work at pressures above 50 bar, preferably 100 bar, more preferably 150 bar.
